# DEMANDE DE BREVET EUROPEEN

(11) **EP 4 529 975 A1**
(43) Date de publication de la demande: **02.04.2025**
(21) Numéro de dépôt: 24198276.8
(22) Date de dépôt: 03.09.2024
(51) Int. Cl.: B01D 53/06, B01D 53/26, A01G 9/24, F24F 3/14, F24F 110/20

(54) **DÉSHUMIDIFICATEUR POUR ABRI DE CULTURE FERMÉ, INSTALLATION COMPRENANT UN TEL ABRI ET PROCÉDÉ DE DÉSHUMIDIFICATION D AIR DANS UN TEL ABRI**

(30) Priorité: 15.09.2023 FR 2309759
(71) Demandeur: Airgaia, 34920 Le Cres (FR)
(72) Inventeur: MALEY, Vincent, 83860 Nans les Pins (FR); CUQ, Fabien, 34730 SAINT-VINCENT-DE-BARBEYRARGUES (FR)
(74) Mandataire: Cornuejols, Marine Sophie

(57) **Abrégé**

Le déshumidificateur pour abri de culture fermé comprend :
- un premier circuit (515) de transport d'un premier flux d'air selon un sens prédéterminé,
- un deuxième circuit (530) de transport d'un deuxième flux d'air,
- un dispositif dessiccant (510) à régénération cyclique dont une portion à régénérer (511) est positionnée dans le premier circuit pour être traversée par le premier flux d'air et dont une portion de dessiccation (512) pour capturer de l'eau dans le deuxième flux d'air est positionnée dans le deuxième circuit pour être traversée par le deuxième flux d'air,
- un groupe de froid comprenant un condenseur (517) de réchauffement du premier flux d'air et un évaporateur (518) de refroidissement du premier flux d'air, tels que, dans le premier circuit :
- le condenseur est connecté en amont de la portion à régénérer, et
- l'évaporateur est connecté en aval de la portion à régénérer.

## Description

### Domaine technique de l'invention

L'invention se rapporte au domaine de la déshumidification des abris de culture fermés tels que les serres. Plus précisément, elle concerne un déshumidificateur pour abri de culture fermé, une installation comprenant un abri de culture fermé, ainsi qu'un procédé de déshumidification d'air présent à l'intérieur d'un abri de culture fermé.

### État de la technique

Dans les serres de culture et notamment dans les serres agricoles, l'excès d'humidité est courant. Il conduit à ce que des condensats d'eau se déposent sur les cultures et en dégradent la qualité. De plus, le développement de maladies, de champignons, de moisissures et/ou de parasites est favorisé lorsque la serre est trop humide. En outre, un air trop humide dans la serre ralentit la croissance des plantes cultivées.

Pour lutter contre les conséquences d'un excès d'humidité sur les cultures sous serre, les agriculteurs et les maraîchers utilisent des traitements phytosanitaires qui sont coûteux et polluants. Pour déshumidifier, les producteurs procèdent par chauffage de la serre, puis aération de la serre moyennant son ouverture par exemple par le dessus, ce qui se traduit par une consommation d'énergie pouvant représenter de 20 % à 50 % de la consommation annuelle totale d'énergie pour une serre.

De plus, les produits rendus impropres à la vente dans les récoltes par un excès d'humidité doivent être retirés, ce qui se traduit par une perte de revenu et par du temps perdu à effectuer du tri.

Des dispositifs de déshumidification d'un abri de culture fermé sont connus.

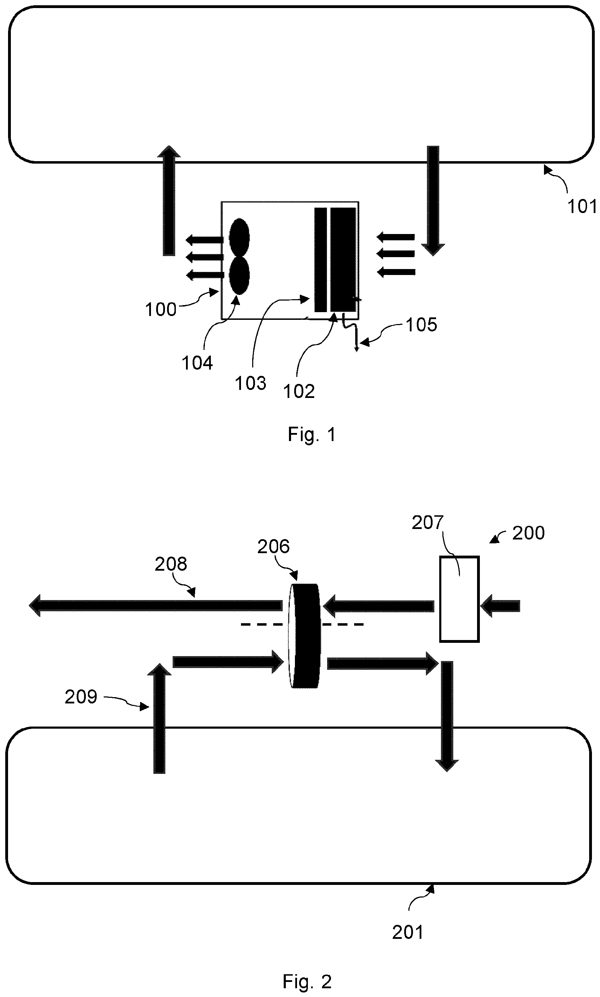

La figure 1 représente un dispositif 100 de déshumidification connu d'un abri de culture fermé tel qu'une serre 101 ayant recourt à une déshumidification généralement appelée « déshumidification thermodynamique ». Le dispositif de déshumidification 100 comporte un groupe de froid dont seuls l'évaporateur 102 et le condenseur 103 sont représentés sur la figure 1 dans un souci de concision. Le flux d'air extrait de la serre et entraîné à travers le dispositif de déshumidification 100 par un ventilateur 104 est symbolisé par les flèches rectilignes sur la figure 1. Dans le dispositif de déshumidification 100, l'air traverse d'abord l'évaporateur 102 dans lequel de l'eau présente dans l'air se condense et forme des condensats, c'est-à-dire de l'eau liquide 105. Les condensats sont évacués. Après avoir perdu de l'eau par refroidissement dans l'évaporateur 102, l'air est réchauffé à travers le condenseur 103, puis renvoyé vers la serre 101.

Le dispositif de déshumidification 100 est efficace, pour déshumidifier l'air dans la serre 101, lorsque l'air dans la serre 101 a une température de l'ordre de 15 °C à 25 °C.

Malheureusement, le dispositif de déshumidification 100 est peu ou pas efficace, pour déshumidifier l'air dans la serre 101, lorsque l'air dans la serre 101 a une température de l'ordre de 0 °C à 10 °C.

En effet, lorsque la température dans la serre 101 est de l'ordre de 0 °C à 10 °C, l'évaporation du fluide frigorigène dans l'évaporateur 102 se fait entre -10 et 0 °C, ce qui fait givrer l'évaporateur 102. En d'autres termes , l'eau contenue dans l'air gèle au contact de l'évaporateur 102 et forme de la glace. Pour enlever le givre et récupérer l'eau de ce givre, des cycles de dégivrage sont nécessaires. Le dégivrage est énergivore s'il est fait par des résistances électriques ou par inversion de cycle. S'il est fait par gaz chauds, il ne consomme que la puissance du compresseur du groupe de froid, mais le cycle est long et parfois insuffisant. Enfin, pour des températures dans la serre au-dessus de 5 °C, le dégivrage avec l'air pris dans la serre 101 fonctionne, mais le cycle est très long. Pendant le dégivrage, le dispositif de déshumidification 100 ne déshumidifie plus l'air de la serre 101. Si le dégivrage est déclenché trop tard, l'évaporateur 102 est pris dans une enveloppe de glace, ce qui génère une panne. Si le dégivrage est déclenché trop tôt, de l'énergie et du temps de fonctionnement sont dépensés inutilement.

De plus, un air froid contient peu d'humidité sous forme de vapeur. Pour une puissance de l'évaporateur 102 donnée permettant d'abaisser de 10 °C la température de l'air qui traverse cet évaporateur 102, la quantité d'eau extraite de l'air par le dispositif de déshumidification 100 est de :
- 4 g d'eau par kilogramme d'air pour une serre 101 contenant de l'air à 20 °C et 80 % d'humidité,
- 3 g d'eau par kilogramme d'air pour une serre 101 contenant de l'air à 10 °C et 80 % d'humidité, et
- 2 g d'eau par kilogramme d'air pour une serre 101 contenant de l'air à 0 °C et 80 % d'humidité.

On voit que la capacité de déshumidification du dispositif de déshumidification 100 décroît avec la baisse de la température de l'air traité.

Par ailleurs, plus l'air dans la serre 101 est froid, plus une température d'évaporation basse est nécessaire pour parvenir à condenser l'eau dans l'air humide. Considérons, par exemple, que la température d'évaporation du fluide frigorigène dans l'évaporateur 102 est de +5 °C. Considérons, de plus, que le compresseur dans le groupe de froid a une puissance de froid nominale de 20 kW. La puissance de froid de ce compresseur baisse avec la température de l'air dans la serre :
- la puissance est de 18,3 kW pour une température de l'air dans la serre 101 « Tserre » de 20 °C,
- la puissance est de 14,3 kW pour une température de l'air dans la serre 101 « Tserre » de 10 °C, et
- la puissance est de 10,3 kW pour une température de l'air dans la serre 101 « Tserre » de 0 °C.

Le compresseur du groupe de froid perd de 25 à 50 % de sa capacité à produire de la puissance de froid utilisable pour déshumidifier l'air de la serre 101.

Les inconvénients mentionnés ci-dessus du dispositif de déshumidification 100 valent également dans le cas d'un abri de culture fermé autre qu'une serre. Par exemple, ils valent également lorsque le dispositif de déshumidification 100 déshumidifie l'air contenu dans une salle de culture en intérieur avec éclairage artificiel.

La figure 2 représente un dispositif 200 de déshumidification d'une serre 201 connu ayant recourt à une déshumidification généralement appelée « déshumidification par adsorption ». Ce dispositif de déshumidification 200 comporte une roue dessiccante 206 dont une portion à régénérer est traversée par un flux d'air 208 de préférence extrait hors de la serre 201. Une portion de dessiccation de la roue dessiccante 206 est traversée par un flux d'air 209 extrait de la serre 201 et renvoyé dans cette serre 201 après avoir été asséché par la portion de dessiccation. L'air du flux d'air 208 traverse un dispositif chauffant 207 où il est chauffé avant de traverser la portion à régénérer de la roue dessiccante 206. Dans le dispositif chauffant 207, l'air du flux d'air 208 est chauffé pour accroître sa capacité à extraire de l'eau de la roue dessiccante 206.

### Résumé de l'invention

L'invention a au moins pour but de remédier à tout ou partie de ces inconvénients et notamment d'améliorer l'efficacité de la déshumidification de l'air dans un abri de culture fermé lorsque l'air dans l'abri de culture fermé est froid.

Selon un premier aspect, la présente invention vise un déshumidificateur pour abri de culture fermé, qui comprend :
- un premier circuit de transport d'un premier flux d'air selon un sens prédéterminé,
- un deuxième circuit de transport d'un deuxième flux d'air,
- un dispositif dessiccant à régénération cyclique dont une portion à régénérer est positionnée dans le premier circuit pour être traversée par le premier flux d'air et dont une portion de dessiccation pour capturer de l'eau dans le deuxième flux d'air est positionnée dans le deuxième circuit pour être traversée par le deuxième flux d'air,
- un groupe de froid comprenant un condenseur de réchauffement du premier flux d'air et un évaporateur configuré pour refroidir et déshumidifier le premier flux d'air, par condensation d'eau présente dans le premier flux d'air, qui sont tels que :
   - le condenseur est connecté dans le premier circuit, en amont de la portion à régénérer du dispositif dessiccant, et
- l'évaporateur est connecté dans le premier circuit, en aval de la portion à régénérer du dispositif dessiccant.

Grâce à ces dispositions, le déshumidificateur pour abri de culture fermé objet de la présente invention présente un haut rendement énergétique et consomme peu d'énergie. Un tel rendement rend le dispositif objet de la présente invention compatible avec des abris de culture fermés raccordables à des sources d'électricité de faible puissance.

De plus, le déshumidificateur pour abri de culture fermé objet de la présente invention peut fonctionner avec l'électricité comme seule source d'énergie. Par comparaison, le dispositif de déshumidification 200 connu a une consommation énergétique élevée. Pour cette raison, le dispositif de déshumidification 200 est utilisé, le plus souvent, en association avec un réseau d'eau chaude ou une source de combustible fossile telle que du gaz naturel ou du gasoil, même si le dispositif chauffant 207 peut également être chauffé au moyen de résistances électriques. Dans le cas de l'utilisation d'un réseau d'eau chaude pour le fonctionnement du dispositif de déshumidification 200, l'eau chaude de ce réseau est employée pour le chauffage du dispositif chauffant 207. Dans le cas de l'utilisation d'un combustible fossile pour le fonctionnement du dispositif de déshumidification 200, la chaleur issue de la combustion de ce combustible fossile est employée pour le chauffage du dispositif chauffant 207 par l'intermédiaire d'un liquide caloporteur tel que de l'eau.

Par ailleurs, le déshumidificateur pour abri de culture fermé objet de la présente invention est simple à installer. En particulier, le déshumidificateur pour abri de culture fermé objet de la présente invention est à connecter à un abri de culture fermé de manière que l'air du premier flux d'air et l'air du deuxième flux d'air proviennent de l'abri de culture fermé et retournent à cet abri de culture fermé. On peut donc installer le déshumidificateur pour abri de culture fermé objet de la présente invention à l'intérieur d'une serre sans utiliser de gaine aéraulique d'acheminement d'air entre le déshumidificateur et l'extérieur de la serre et sans qu'un trou pour le passage de cette gaine aéraulique ne soit ménagé dans une paroi de la serre. Par comparaison, dans le dispositif de déshumidification 200 connu, l'air ayant effectué une régénération de la roue dessiccante 206 doit être rejeté à l'extérieur de la serre. Le déshumidificateur pour abri de culture fermé objet de la présente invention peut être placé pratiquement n'importe où à l'intérieur de l'abri de culture fermé. En particulier, le déshumidificateur pour abri de culture fermé objet de la présente invention invention peut être placé dans une zone centrale de l'abri de culture fermé ou dans une autre zone dans laquelle une bonne déshumidification de tout l'abri de culture fermé peut être obtenue..

Dans des modes de réalisation, le déshumidificateur pour abri de culture fermé comporte un échangeur de chaleur connecté dans le premier circuit est configuré pour mettre en relation d'échange thermique le premier flux d'air dans une première section du premier circuit avec ce premier flux d'air dans une deuxième section du premier circuit, la première section du premier circuit se trouvant entre la portion à régénérer du dispositif dessiccant et l'évaporateur, la deuxième section du premier circuit se trouvant en aval de l'évaporateur.

Grâce à ces dispositions, le premier flux d'air sortant de l'évaporateur peut refroidir ce même premier flux d'air avant d'entrer dans l'évaporateur. Quand le premier flux d'air entre dans l'évaporateur après avoir été refroidi dans l'échangeur de chaleur, son humidité relative a augmenté par le refroidissement dans l'échangeur de chaleur, si bien que la condensation de l'eau présente dans le premier d'air s'effectue plus efficacement dans le l'évaporateur.

Dans des modes de réalisation, le déshumidificateur pour abri de culture fermé comprend une branche de contournement configurée pour acheminer de l'air dans l'abri de culture fermé, passer à l'écart du dispositif dessiccant et se raccorder dans le premier circuit, entre le dispositif dessiccant et l'évaporateur, le condenseur étant un premier condenseur, le déshumidificateur pour abri de culture fermé comprenant un deuxième condenseur, le déshumidificateur comportant un moyen de commutation entre un premier état, dans lequel les premier et deuxième circuits sont opérationnels et dans lequel la branche de contournement est fermée, et un deuxième état, dans lequel le deuxième condenseur est connecté dans le premier circuit, en aval de l'évaporateur, et dans lequel la branche de contournement est ouverte et substituée dans le premier circuit à une section désactivable comprenant le dispositif dessiccant.

Grâce à ces dispositions, le déshumidificateur pour abri de culture fermé est à même de déshumidifier efficacement l'air dans la serre aussi bien quand l'air dans la serre est froid, par exemple à une température de l'ordre de 0 °C à 10 °C, que lorsque l'air dans la serre est chaud, par exemple à une température de l'ordre de 10 °C à 25 °C et plus. Le déshumidificateur pour abri de culture fermé dans le premier état déshumidifie efficacement l'air extrait de la serre quand l'air dans la serre est dit « froid » (par exemple entre 0 °C et 10 °C). Le déshumidificateur pour abri de culture fermé dans le deuxième état déshumidifie efficacement l'air extrait de la serre quand l'air dans la serre est dit « chaud » (par exemple entre 10 °C et 30 °C). Le déshumidificateur pour abri de culture fermé est donc polyvalent.

Dans des modes de réalisation, le déshumidificateur pour abri de culture fermé est tel que, dans le premier état, le premier condenseur est opérationnel au sein du groupe de froid en étant connecté dans un circuit fermé comprenant l'évaporateur, et tel que, dans le deuxième état, le deuxième condenseur est opérationnel au sein du groupe de froid en étant substitué au premier condenseur dans le circuit fermé.

Grâce à ces dispositions, plusieurs composants, dont l'évaporateur, sont utilisés dans le premier état comme dans le deuxième état et ne sont donc pas dédoublés. Une simplification et des économies sont ainsi obtenues.

Dans des modes de réalisation, le déshumidificateur pour abri de culture fermé comprend un dispositif de contrôle et de commande configuré pour mesurer la température ambiante et pour activer le moyen de commutation, le déshumidificateur commutant du deuxième état au premier état lorsque la température ambiante descend en dessous d'une première valeur limite prédéterminée.

Grâce à ces dispositions, la commutation entre le deuxième et le premier état peut être automatisée de manière à être fonction des évolutions de température de l'air dans la serre. Une fois le déshumidificateur connecté à une serre, la température ambiante peut notamment être la température ambiante dans la serre, c'est-à-dire la température de l'air à l'intérieur de la serre.

Dans des modes de réalisation, la première valeur limite prédéterminée est comprise entre 8 °C et 12 °C.

Dans des modes de réalisation, le dispositif de contrôle et de commande est configuré pour activer le moyen de commutation, le déshumidificateur commutant du premier état au deuxième état lorsque la température ambiante monte au-dessus d'une deuxième valeur limite prédéterminée.

Grâce à ces dispositions, une telle commutation permet d'avoir une plus grande capacité de déshumidification, notamment au-dessus d'une valeur de température ambiante.

Dans des modes de réalisation, la deuxième valeur limite prédéterminée est comprise entre 8 °C et 12 °C.

Dans des modes de réalisation, le déshumidificateur pour abri de culture fermé comprend des moyens d'entraînement configurés pour mettre en mouvement l'air des premier et deuxième flux d'air.

Selon un deuxième aspect, la présente invention vise une installation qui comprend un abri de culture fermé ayant un volume intérieur rempli d'air, qui comprend un déshumidificateur pour abri de culture fermé objet de la présente invention, et dans laquelle une entrée du premier circuit, une entrée du deuxième circuit, une sortie du premier circuit et une sortie du deuxième circuit sont en communication fluidique avec le volume intérieur de la serre.

Dans des modes de réalisation, le premier circuit passe à l'écart de la portion de dessiccation du dispositif dessiccant.

Grâce à ces dispositions, toute, ou pratiquement toute, la portion de dessiccation peut être consacrée au traitement du deuxième flux d'air. Le rendement de cette portion de dessiccation en termes de quantité d'eau capturée dans le deuxième flux d'air est élevé.

Selon un troisième aspect, la présente invention vise un procédé de déshumidification d'air présent à l'intérieur d'une serre, qui comprend une régénération et un traitement :
dans lequel la régénération comprend :
   - une étape de chauffage d'un premier flux d'air en provenance d'un volume intérieur de l'abri de culture fermé; à travers un condenseur d'un groupe de froid,
   - une étape de régénération au moins partielle, par le premier flux d'air chauffé, d'une portion à régénérer d'un dispositif dessiccant à régénération cyclique
   - après l'étape de régénération, une étape de refroidissement et de déshumidification du premier flux d'air à travers un évaporateur du groupe de froid de manière que de l'eau présente dans le premier flux d'air se condense dans l'évaporateur pour être évacuée sous forme liquide,
   - une étape d'acheminement du premier flux d'air de la portion à régénérer du dispositif dessiccant vers le volume intérieur de l'abri de culture fermé,
dans lequel le traitement comporte :
   - une étape d'extraction de la vapeur d'eau d'un deuxième flux d'air en provenance du volume intérieur de l'abri de culture fermé, en faisant passer ledit deuxième flux d'air à travers une portion de dessiccation du dispositif dessiccant,
   - une étape d'acheminement du deuxième flux d'air de la portion de dessiccation du dispositif dessiccant vers le volume intérieur de l'abri de culture fermé.

Dans des modes de réalisation, le procédé objet de la présente invention comporte, de plus, une étape de mélange du premier flux d'air et du deuxième flux d'air avant d'être introduit dans le volume intérieur de l'abri de culture fermé.

Grâce à ces dispositions, l'air entrant dans la serre en fin du procédé est à une température sensiblement supérieure à la température dans l'abri de culture fermé.

Les buts, avantages et caractéristiques particulières du procédé objet de la présente invention étant similaires à ceux du déshumidificateur objet de la présente invention, ils ne sont pas rappelés ici.

### Brève description des figures

D'autres avantages et caractéristiques ressortiront plus clairement de la description qui va suivre de plusieurs modes particuliers de réalisation de l'invention, donnés à titre d'exemple non limitatif et représentés aux dessins annexés, parmi lesquels :
- La figure 1 est une vue schématique d'une serre raccordée à un déshumidificateur selon un premier art antérieur,
- La figure 2 est une vue schématique d'une serre raccordée à un déshumidificateur selon un deuxième art antérieur,
- La figure 3 est une vue schématique d'une installation dans laquelle une serre est raccordée à un déshumidificateur pour abri de culture fermé selon un premier mode de réalisation de l'invention,
- La figure 4 est une vue schématique d'un sous-ensemble d'un déshumidificateur pour abri de culture fermé selon un deuxième mode de réalisation de l'invention,
- La figure 5 est une vue schématique d'une installation dans laquelle le déshumidificateur pour abri de culture fermé selon le deuxième mode de réalisation de l'invention est raccordé à une serre et se trouve dans un premier état et dans un premier mode de fonctionnement associé à ce premier état,
- La figure 6 est une vue schématique qui représente la même installation que la figure 5 et sur laquelle le déshumidificateur pour abri de culture fermé selon le deuxième mode de réalisation se trouve dans un deuxième état et dans un deuxième mode de fonctionnement associé à ce deuxième état,
- La figure 7 représente, sous forme d'un logigramme, des étapes du procédé de déshumidification de serre objet de l'invention, et
- La figure 8 représente, sous forme de graphique, le procédé thermodynamique mis en oeuvre dans le premier circuit dans le diagramme de l'air humide.

### Description des modes de réalisation

La présente description est donnée à titre non limitatif, chaque caractéristique d'un mode de réalisation pouvant être combinée à toute autre caractéristique de tout autre mode de réalisation de manière avantageuse.

L'expression "et/ou", telle qu'elle est utilisée dans le présent document et dans les revendications, doit être comprise comme signifiant "l'un ou l'autre ou les deux" des éléments ainsi conjoints, c'est-à-dire des éléments qui sont présents de manière conjonctive dans certains cas et de manière disjonctive dans d'autres cas. Les éléments multiples énumérés avec "et/ou" doivent être interprétés de la même manière, c'est-à-dire "un ou plusieurs" des éléments ainsi conjoints. D'autres éléments peuvent éventuellement être présents, autres que les éléments spécifiquement identifiés par la clause "et/ou", qu'ils soient liés ou non à ces éléments spécifiquement identifiés. Ainsi, à titre d'exemple non limitatif, une référence à "A et/ou B", lorsqu'elle est utilisée conjointement avec un langage ouvert tel que "comprenant" peut se référer, dans un mode de réalisation, à A seulement (incluant éventuellement des éléments autres que B) ; dans un autre mode de réalisation, à B seulement (incluant éventuellement des éléments autres que A) ; dans un autre mode de réalisation encore, à A et B (incluant éventuellement d'autres éléments) ; etc.

Tel qu'utilisé ici dans la description et dans les revendications, "ou" doit être compris comme ayant la même signification que "et/ou" tel que défini ci-dessus. Par exemple, lorsqu'on sépare des éléments dans une liste, "ou" ou "et/ou" doit être interprété comme étant inclusif, c'est-à-dire l'inclusion d'au moins un, mais aussi de plus d'un, d'un nombre ou d'une liste d'éléments, et, facultativement, d'éléments supplémentaires non listés. Seuls les termes indiquant clairement le contraire, tels que "un seul des" ou "exactement un des", ou, lorsqu'ils sont utilisés dans les revendications, "consistant en", font référence à l'inclusion d'un seul élément d'un nombre ou d'une liste d'éléments.

Telle qu'elle est utilisée dans la présente description et dans les revendications, l'expression "au moins un", en référence à une liste d'un ou de plusieurs éléments, doit être comprise comme signifiant au moins un élément choisi parmi un ou plusieurs éléments de la liste d'éléments, mais n'incluant pas nécessairement au moins un de chaque élément spécifiquement énuméré dans la liste d'éléments et n'excluant pas toute combinaison d'éléments dans la liste d'éléments. Cette définition permet également la présence facultative d'éléments autres que les éléments spécifiquement identifiés dans la liste des éléments auxquels l'expression "au moins un" fait référence, qu'ils soient liés ou non à ces éléments spécifiquement identifiés. Ainsi, à titre d'exemple non limitatif, "au moins l'un de A et B" (ou, de manière équivalente, "au moins l'un de A ou B", ou, de manière équivalente, "au moins l'un de A et/ou B") peut se référer, dans un mode de réalisation, à au moins un, incluant éventuellement plus d'un, A, sans B présent (et incluant éventuellement des éléments autres que B) ; dans un autre mode de réalisation, à au moins un, comprenant éventuellement plus d'un, B, sans A présent (et comprenant éventuellement des éléments autres que A) ; dans encore un autre mode de réalisation, à au moins un, comprenant éventuellement plus d'un, A, et au moins un, comprenant éventuellement plus d'un, B (et comprenant éventuellement d'autres éléments) ; etc.

Dans les revendications, ainsi que dans la description ci-dessous, toutes les expressions transitoires telles que "comprenant", "incluant", "portant", "ayant", "contenant", "impliquant", "tenant", "composé de", et autres, doivent être comprises comme étant ouvertes, c'est-à-dire comme signifiant « incluant, mais non limité à ». Seules les expressions transitoires "consistant en" et "consistant essentiellement en" doivent être comprises comme des expressions transitoires fermées ou semi-fermées, respectivement.

On note dès à présent que les figures ne sont pas à l'échelle.

Au sens où on l'entend dans la présente description et dans les revendications annexées, l'expression « groupe de froid » couvre l'ensemble des dispositifs pour produire du froid, indépendamment de la technologie employée, et, notamment, les pompes à chaleur et les réfrigérateurs à adsorption.

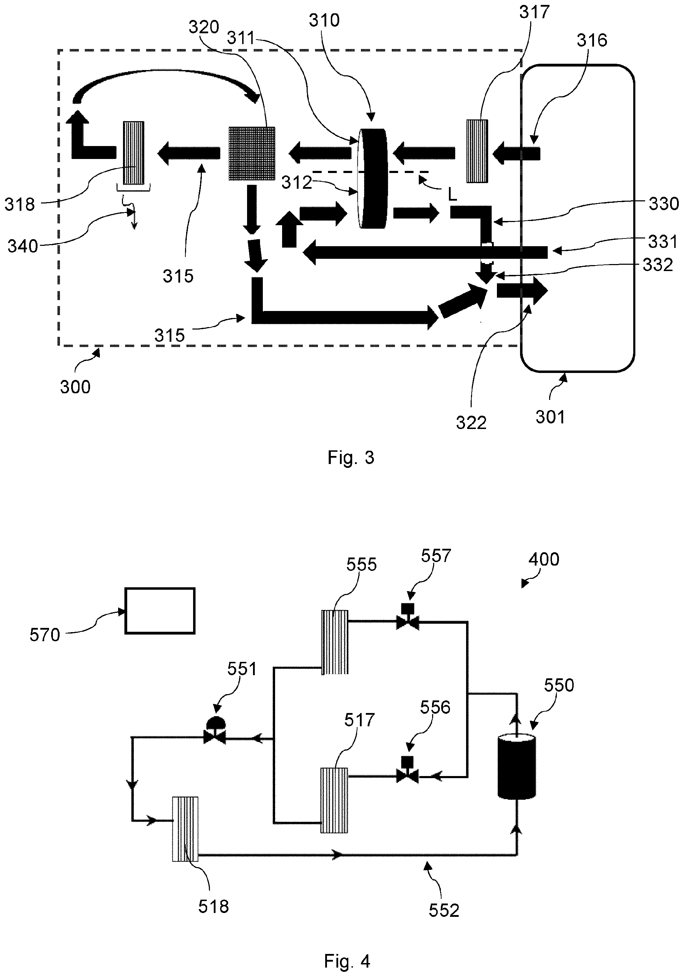

Un exemple d'abri de culture fermé au sens où on l'entend ici est la serre. Au sens où on l'entend ici, l'expression « abri de culture fermé » couvre également les salles avec éclairage artificiel où on pratique la culture en intérieur souvent appelée « culture indoor ». On observe, sur la figure 3, un déshumidificateur 300 pour abri de culture fermé selon un premier mode de réalisation de l'invention.

Le déshumidificateur 300 comprend un dispositif dessiccant 310 à régénération cyclique, par exemple, une roue dessiccante. La roue dessiccante 310 est connue de l'homme du métier. La roue dessiccante est entourée par une enveloppe, non représentée dans un souci de clarté. L'enveloppe et la roue dessiccante 310 délimitent =une zone de régénération située au-dessus de la ligne tiretée L set une zone de dessiccation située en dessous de la ligne tiretée L.

Une portion à régénérer 311 de la roue dessiccante 310 se trouve dans la zone de régénération. Une portion de dessiccation 312 de la roue dessiccante 310 se trouve dans la zone de dessiccation. La roue dessiccante 310 est configurée pour être mise en rotation par rapport à son axe, par exemple en étant entraînée par un moteur. En tournant la roue dessiccante 310, on fait passer une portion de la roue dessiccante 310 de la zone de régénération à la zone de dessiccation, en même temps qu'on fait passer une portion de la roue dessiccante 310 de la zone de dessiccation à la zone de régénération.

Préférentiellement, la roue dessiccante 310 est traversée de part en part par des canaux parallèles. Par exemple, les canaux disposés les uns par rapport aux autres selon une structure en nid d'abeille. Les parois de ces canaux sont revêtues d'une matière adsorbante à même d'adsorber et désorber alternativement de l'eau.

Le déshumidificateur 300 comprend un premier circuit 315 de transport d'un premier flux d'air selon un sens prédéterminé, qui est symbolisé par le sens des flèches représentant ce premier circuit 315 sur la figure 3.

Le premier circuit 315 comprend une entrée 316 qui est raccordée au volume intérieur d'un abri de culture fermé 301, par exemple une serre. Un condenseur 317 de réchauffement du premier flux d'air est connecté dans le premier circuit 315, en aval de l'entrée 316.

La portion à régénérer 311 de la roue dessiccante 310 est positionnée dans le premier circuit 315, en aval du condenseur 317, pour être traversée par le premier flux d'air.

Le condenseur 317 fait partie d'un groupe de froid qui comprend également un évaporateur 318 de refroidissement du premier flux d'air. D'une manière connue de l'homme du métier, le groupe de froid peut également comprendre un compresseur (non représenté) et un détendeur (non représenté), que des conduits de raccordement (non représentés) raccordent au condenseur 317 et à l'évaporateur 318 dans un circuit fermé contenant un fluide frigorigène.

Dans le premier mode de réalisation décrit ci-dessus, le groupe de froid est une pompe à chaleur du type à compression. Le groupe de froid peut également être du type à adsorption, auquel cas il ne comprend pas de détendeur ni de compresseur.

L'évaporateur 318 est connecté dans le premier circuit 315, en aval de la portion à régénérer 311 de la roue dessiccante 310.

Un échangeur de chaleur 320 est connecté dans le premier circuit 315, et ce en deux endroits de manière à mettre en relation d'échange thermique le premier flux d'air avec lui-même. Plus précisément, le premier flux d'air circulant de la portion à régénérer 311 à l'évaporateur 318 échange de la chaleur, dans l'échangeur de chaleur 320, avec le premier flux d'air sorti de l'évaporateur 318 et s'acheminant vers la sortie 322 du premier circuit 315. Cette sortie 322 est raccordée au volume intérieur de la serre 301.

Le déshumidificateur 300 comporte un deuxième circuit 330 de transport d'un deuxième flux d'air. Le sens de circulation du deuxième flux d'air dans le deuxième circuit 330 est symbolisé par le sens des flèches représentant ce deuxième circuit 330 sur la figure 3.

Le deuxième circuit 330 comprend une entrée 331 qui est raccordée au volume intérieur de la serre 301. La portion de dessiccation 312 de la roue dessiccante 310 est positionnée dans le deuxième circuit 330, entre l'entrée 331 et une sortie 332 du deuxième circuit 330.

Dans l'exemple représenté, la sortie 332 est un raccordement du deuxième circuit 330 dans le premier circuit 315. Il s'ensuit que le deuxième flux d'air est mélangé au premier flux d'air avant d'être rejeté dans le volume intérieur de la serre 301. Dans des variantes (non représentées), la sortie du premier circuit et la sortie du deuxième circuit sont distinctes et configurées pour être raccordées indépendamment l'une de l'autre au volume intérieur de la serre 1. Dans ce cas, le deuxième flux d'air circule dans le deuxième circuit dans le même sens que celui représenté sur la figure 3 ou dans le sens inverse.

Toujours dans l'exemple représenté, l'entrée 316 du premier circuit 315 et l'entrée 331 du deuxième circuit 330 sont distinctes l'une de l'autre. Dans des modes de réalisation (non représentés), le premier et le deuxième circuit ont une entrée commune à raccorder au volume intérieur de la serre 301.

Le déshumidificateur 300 comprend des moyens d'entraînement (non représentés), à même de mettre en mouvement l'air des premier et deuxième flux d'air. Ces moyens d'entraînement peuvent comprendre un ventilateur commun au premier circuit 315 et au deuxième circuit 330. Dans le cas d'un tel ventilateur commun, une ou plusieurs vannes peuvent être configurées pour régler les débits du premier flux d'air et/ou du deuxième flux d'air. Les moyens d'entraînement peuvent aussi comprendre plusieurs ventilateurs, dont un est configuré dans le premier circuit 315 pour mettre en mouvement l'air du premier flux d'air, et dont un autre est configuré dans le deuxième circuit 330 pour mettre en mouvement l'air du deuxième flux d'air.

Lorsque le déshumidificateur fonctionne, il y est réalisé un traitement et une régénération, qui peuvent être simultanés comme c'est le cas dans l'exemple décrit dans ce qui suit.

Le traitement est un traitement du deuxième flux d'air. Dans ce traitement, de l'air humide est prélevé à l'intérieur de la serre 301 et entraîné dans le deuxième circuit 330 pour y former le deuxième flux d'air. La portion de dessiccation 312 capture de l'eau dans le deuxième flux d'air qui la traverse en circulant dans le deuxième circuit 330.

La régénération s'effectue au niveau du premier circuit 315.

De l'air est prélevé à l'intérieur de la serre 301 et entraîné dans le premier circuit 315 pour y former le deuxième flux d'air. Quand il traverse le condensateur 317, l'air du premier flux d'air est chauffé, ce qui fait baisser son humidité relative et accroît sa capacité à se charger en eau et donc à régénérer la portion à régénérer 311 dans la roue dessiccante 310.

L'air du premier flux d'air traverse la partie à régénérer 311 après avoir traversé le condensateur 317. Quand il traverse la partie à régénérer 311, l'air du premier flux d'air extrait de l'eau de cette partie à régénérer qu'il régénère ainsi.

Entre la partie à régénérer 311 de la roue dessiccante 310 et l'évaporateur 318, l'air du premier flux d'air traverse une première fois l'échangeur de chaleur 320, lors duquel il est refroidi. L'humidité relative du premier flux d'air augmente avec son refroidissement à travers l'échangeur de chaleur 320.

L'air du premier flux d'air traverse l'évaporateur 318 après avoir traversé seulement une première fois l'échangeur de chaleur 320. Quand il traverse l'évaporateur 318, l'air du premier flux d'air est refroidi. De l'eau présente dans le premier flux d'air se condense alors dans l'évaporateur 318 puis s'écoule sous forme de condensats 340, qui sont évacués. La quantité d'eau se condensant dans l'évaporateur 318 depuis le premier flux d'air est d'autant plus importante que ce premier flux d'air a été refroidi précédemment dans l'échangeur de chaleur 320.

Le premier flux d'air est moins chargé en eau et plus froid après l'évaporateur 318, qu'avant l'évaporateur 318.

Après avoir traversé l'évaporateur 318, l'air du premier flux d'air traverse une deuxième fois l'échangeur de chaleur 320. L'air qui traverse la deuxième fois l'échangeur de chaleur 320 est réchauffé par l'air qui traverse la première fois cet échangeur de chaleur 320. En traversant la deuxième fois l'échangeur de chaleur 320, l'air du premier flux d'air devient plus chaud et son humidité relative baisse.

Après avoir traversé la deuxième fois l'échangeur de chaleur 320, l'air du premier flux d'air est envoyé vers le volume intérieur de la serre 301.

Pendant la régénération, la portion à régénérer 311 dans la roue dessiccante 310 libère de l'eau et elle est régénérée. Pendant le traitement du deuxième flux d'air, la portion de dessiccation 312 dans la roue dessiccante 310 se charge en eau. Par moment, on fait pivoter la roue dessiccante 310 d'un certain angle. Par exemple, on fait tourner la roue dessiccante 310 d'un demi-tour par moment, de manière que la portion à régénérer 311 et la portion de dessiccation 312 ne soient plus les mêmes portions de la roue de dessiccante 310. Dans des variantes, on fait tourner continûment la roue dessiccante 310.

L'échangeur de chaleur 320 peut être retiré. Dans des modes de réalisation, un déshumidificateur objet de la présente invention est le déshumidificateur 300 dépourvu de l'échangeur de chaleur 320.

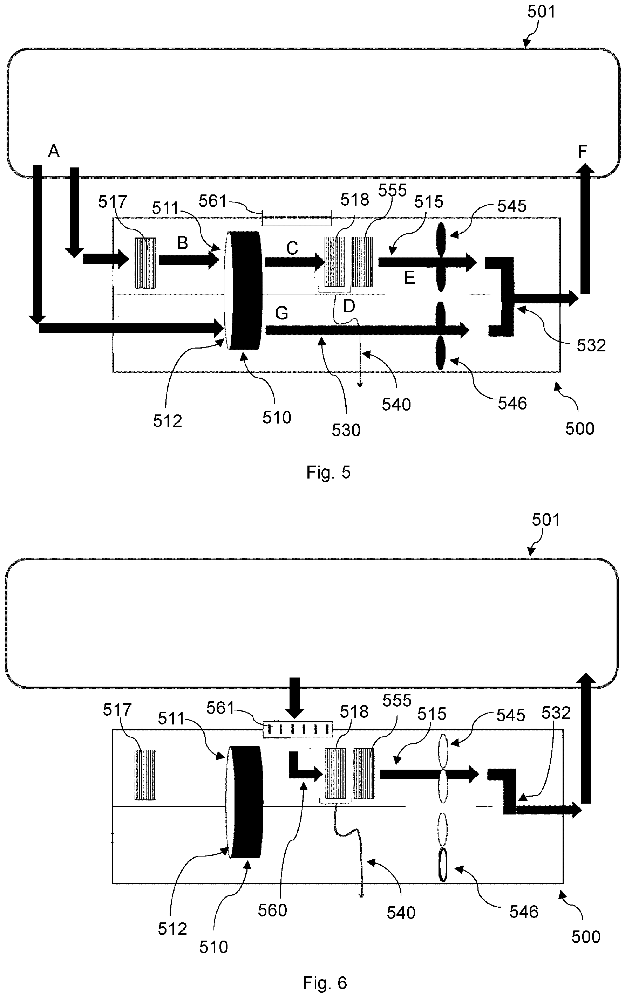

La figure 4 représente schématiquement un sous-ensemble 400 faisant partie d'un déshumidificateur 500 selon un deuxième mode de réalisation de l'invention. Le déshumidificateur 500, représenté en figure 5 et 6, est un déshumidificateur pour abri de culture fermé.

Comme le déshumidificateur 300, le déshumidificateur 500 comprend des moyens d'entraînement d'air. Les moyens d'entraînement que comporte le déshumidificateur 500 peuvent être identiques à ceux du déshumidificateur 300. Dans l'exemple représenté, ils comprennent un ventilateur 545 et un ventilateur 546 visibles sur la figure 5.

Comme illustré sur la figure 4, le sous-ensemble 400 comporte un groupe de froid qui comprend un condenseur 517, un évaporateur 518, un compresseur 550 et un détendeur 551. Le compresseur 550, le condenseur 517, le détendeur 551 et l'évaporateur 518 sont raccordés entre eux dans un circuit fermé 552, qui contient un fluide frigorigène d'une manière connue de l'homme du métier.

Dans ce qui suit, on ne décrit du déshumidificateur 500 que ce par quoi il se distingue du déshumidificateur 300. En outre, lorsqu'une partie référencée du déshumidificateur 500 est identique ou équivalente à une partie référencée du déshumidificateur 300, sa référence numérique est construite en ajoutant 200 à la référence désignant cette partie référencée sur le déshumidificateur 300. De la sorte sont construites notamment les références du condenseur 517 et de l'évaporateur 518.

Le condenseur 517 est un premier condenseur. Le sous-ensemble 400 comporte un deuxième condenseur, qui est le condenseur référencé 555 sur les figures 4 à 6.

Comme illustré sur la figure 4, le deuxième condenseur 555 est raccordé en parallèle du premier condenseur 517. Une vanne 556 est connectée dans l'une des deux branches parallèles dont chacune comporte l'un des condenseurs 517 et 555. Une vanne 557 est connectée dans l'autre branche parmi ces deux branches parallèles. Les vannes 556 et 557 forment un moyen de commutation entre deux états.

Dans un premier état, la vanne 556 est ouverte, tandis que la vanne 557 est fermée de sorte que le deuxième condenseur 555 n'est pas connecté dans le circuit fermé 552. Sur la figure 4, le sous-ensemble 400 est dans le premier état, dans lequel le fluide frigorigène circule dans le circuit fermé 552 dans le sens indiqué par des têtes de flèche ajoutées sur les traits symbolisant les raccordements.

Les vannes 556 et 557 permettent de commuter le sous-ensemble 400 entre le premier état et un deuxième état dans lequel le deuxième condenseur 555 est substitué au premier condenseur 517 dans le circuit fermé. Dans ce deuxième état, la vanne 557 est ouverte, tandis que la vanne 556 est fermée. Les vannes, 556 et 557, peuvent notamment être des électrovannes commandées par un dispositif de contrôle et de commande 570, dont les connexions aux différents éléments du déshumidificateur 500 ne sont pas représentées dans un souci de clarté. Dans des modes de réalisation, les vannes, 556 et 557, sont remplacées par une vanne trois voies qui oriente le flux le flux d'air issu de la serre soit vers le premier condenseur 517 soit vers le deuxième condenseur 555.

Le déshumidificateur 500 est configuré pour déshumidifier l'air présent dans le volume intérieur d'un abri de culture fermé, qui est la serre 501 visible sur les figures 5 et 6 dans l'exemple représenté.

Le condenseur 555 est connecté dans le premier circuit 515, en aval de l'évaporateur 518.

Comme illustré sur la figure 6, le déshumidificateur 500 comprend une branche de contournement 560 qui passe à l'écart de la roue dessiccante 510 et se raccorde au premier circuit 515, entre la portion à régénérer 511 de cette roue dessiccante 510 et l'évaporateur 518.

Dans l'exemple représenté, le déshumidificateur 500 est dépourvu de l'échangeur de chaleur 320. Dans des modes de réalisation, le déshumidificateur 500 comporte l'échangeur de chaleur 320.

Un registre 561 connecté dans la branche de contournement 560 fait partie du moyen de commutation, lesquels comportent les vannes 556 et 557, ainsi que d'autres composants connus en soi et non représentés dans un souci de clarté. Grâce à ces moyens de commutation, le déshumidificateur 500 est commutable entre le premier état et le deuxième état.

Sur la figure 5, le déshumidificateur 500 est dans son premier état. Lorsque le déshumidificateur 500 est dans le premier état, le condenseur 555 est inactif et le registre 561 est fermé.

Lorsqu'il est dans le premier état, le déshumidificateur 500 a le même fonctionnement que le déshumidificateur 300 sauf pour ce qui est de l'échangeur de chaleur 320. Lorsqu'il est dans le premier état, le déshumidificateur 500 a exactement le même fonctionnement que le déshumidificateur 300 dans le cas où il comporte l'échangeur de chaleur 320 comme le déshumidificateur 300.

Le fonctionnement du déshumidificateur 500 dans le premier état est un premier mode de fonctionnement parmi des premier et deuxième modes de fonctionnement du déshumidificateur 500.

Dans son premier mode de fonctionnement, le déshumidificateur 500 est très efficace pour déshumidifier de l'air ayant une température comprise entre environ 0 °C et environ 10 °C.

Dans le premier mode de fonctionnement du déshumidificateur 500, le ventilateur 545 fonctionne et entraîne l'air du premier flux d'air dans le premier circuit 515. Dans le premier mode de fonctionnement du déshumidificateur 500, le ventilateur 546 fonctionne et entraîne l'air du deuxième flux d'air dans le deuxième circuit 530.

Sur la figure 6, le déshumidificateur 500 est dans son deuxième état.

Lorsque le déshumidificateur 500 est dans le deuxième état, il n'y a pas de flux d'air dans le deuxième circuit 530 et la roue dessiccante 510 est inactive.

Toujours lorsque le déshumidificateur 500 est dans le deuxième état, le registre 561 est ouvert et la branche de contournement 560 est substituée, dans le premier circuit 515, à une section désactivable comprenant la portion à régénérer 511 de la roue dessiccante 510 et le condenseur 517.

Encore lorsque le déshumidificateur 500 est dans le deuxième état, le condenseur 517 est inactif, tandis que le condenseur 555 est actif.

Lorsqu'il est dans le deuxième état, le déshumidificateur 500 peut fonctionner selon son deuxième mode de fonctionnement.

Dans le deuxième mode de fonctionnement du déshumidificateur 500, le ventilateur 545 est en marche et entraîne l'air dans le premier circuit 515.

Dans le deuxième mode de fonctionnement du déshumidificateur 500, le ventilateur 546 peut être à l'arrêt, ce qui est le cas sur la figure 6. Dans le deuxième mode de fonctionnement du déshumidificateur 500, le ventilateur 546 peut également fonctionner afin d'augmenter le taux de brassage de l'air à l'intérieur de la serre 501.

Dans le deuxième mode de fonctionnement du déshumidificateur 500, de l'air humide est prélevé dans la serre 501 et entre dans le déshumidificateur 500 par le registre 561 ouvert et par la branche de contournement 560. Cet air est entraîné sous la forme d'un unique flux d'air et traverse l'évaporateur 518 puis le condenseur 555.

Quand il traverse l'évaporateur 518, l'air de l'unique flux d'air est refroidi et atteint son point de rosée. De l'eau présente dans l'unique flux d'air se condense dans l'évaporateur 518 puis s'écoule sous forme de condensats 540, qui sont évacués.

Quand il traverse le condenseur 555, l'air de l'unique flux d'air est réchauffé. Après avoir été réchauffé à travers le condenseur 555, l'air de l'unique flux d'air est rejeté dans le volume intérieur de la serre 501.

Dans le deuxième mode de fonctionnement, le déshumidificateur 500 est très efficace pour déshumidifier de l'air ayant une température comprise entre environ 10 °C et environ 25 °C.

Le déshumidificateur 500 est polyvalent dans la mesure où il peut fonctionner selon le premier mode de fonctionnement pour déshumidifier de l'air à une température comprise entre environ 0 °C et environ 10 °C, et où il peut fonctionner selon le deuxième mode de fonctionnement pour déshumidifier de l'air à une température comprise entre environ 10 °C et environ 25 °C.

Le dispositif de contrôle et de commande 570 est configuré pour mesurer la température ambiante et pour activer le moyen de commutation, le déshumidificateur 500 commutant du deuxième état au premier état lorsque cette température ambiante descend en dessous d'une première valeur limite prédéterminée qui peut être, par exemple, de l'ordre de 10 °C. Par exemple, la température ambiante peut être la température ambiante dans le volume intérieur de la serre 501, c'est-à-dire la température de l'air dans le volume intérieur de la serre 501.

Le dispositif de contrôle et de commande 570 est configuré pour activer le moyen de commutation, le déshumidificateur 500 commutant du premier état au deuxième état lorsque la température ambiante monte au-dessus d'une deuxième valeur limite prédéterminée, préférentiellement différente de la première valeur limite prédéterminée. La deuxième valeur limite prédéterminée peut être, par exemple, de l'ordre de 12 °C. Préférentiellement, la deuxième valeur limite prédéterminée est supérieure à la première valeur limite prédéterminée.

Dans l'exemple représenté, le condenseur 555 est connecté dans le premier circuit 515 dans le deuxième état du déshumidificateur 500 en plus de l'être dans le premier état du déshumidificateur 500. Dans le deuxième mode de fonctionnement du déshumidificateur 500, le condenseur 555 est traversé par le premier flux d'air bien qu'il soit inactif. Dans des variantes (non représentées), le condenseur 555 n'est connecté dans le premier circuit 515 que lorsque le déshumidificateur 500 est dans le deuxième état.

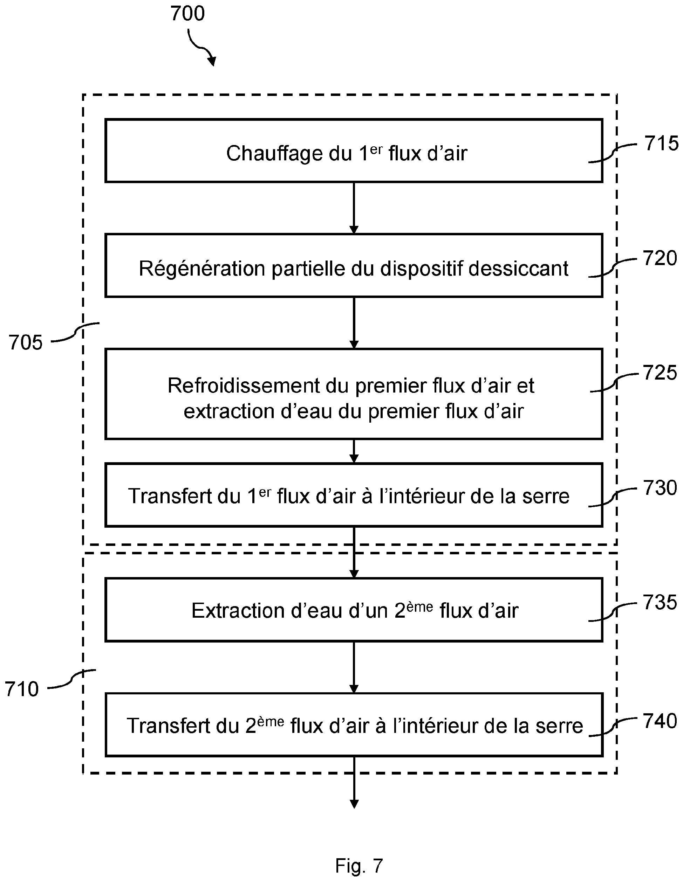

On observe, en figure 7, un mode de réalisation particulier du procédé 700 de déshumidification d'air présent à l'intérieur d'une serre, objet de l'invention.

Ce procédé 700 comprend une régénération 705 et un traitement 710.

La régénération 705 comprend des étapes suivantes :
- une étape 715 de chauffage d'un premier flux d'air en provenance d'un volume intérieur de la serre 301, 501 à travers un condenseur 317, 517 d'un groupe de froid,
- une étape 720 de régénération au moins partielle d'une portion à régénérer 311, 511, par le premier flux d'air chauffé, d'un dispositif dessiccant 310, 510 à régénération cyclique,
- après l'étape 720, une étape 725 de refroidissement et déshumidification du premier flux d'air à travers un évaporateur 318, 518 du groupe de froid de manière que de l'eau présente dans le premier flux d'air se condense dans l'évaporateur 318, 518 pour être évacuée sous forme liquide, et
- une étape 730 d'acheminement du premier flux d'air de la portion à régénérer (311, 511) du dispositif dessiccant 310, 510 vers le volume intérieur de la serre 301, 501.

Le traitement 710 comporte des étapes suivantes :
- une étape 735d'extraction de la vapeur d'eau d'un deuxième flux d'air en provenance du volume intérieur de la serre 301, 501, en faisant passer ledit deuxième flux d'air à travers une portion de dessiccation 312, 512 du dispositif dessiccant 310, 510, et
- une étape 740, d'acheminement du deuxième flux d'air de la portion de dessiccation 312, 512 du dispositif dessiccant 310, 510 vers le volume intérieur de la serre 301, 501.

Dans le procédé 700, la régénération et le traitement sont de préférence simultanés. Il peut toutefois en être autrement. Par exemple, la régénération et le traitement peuvent alterner tout en pouvant être momentanément simultanés sur des périodes de chevauchement. Par ailleurs, la régénération peut être interrompue momentanément pendant que le traitement se poursuit continûment. De même, le traitement peut être interrompu momentanément pendant que la génération se poursuit continûment. Le choix parmi ces différents modes de fonctionnement peut se faire pour optimiser des grandeurs comme le rendement énergétique du procédé de déshumidification selon l'invention. En outre, au moins deux de ces différents modes de fonctionnement peuvent être combinés.

Dans des modes de réalisation, le procédé objet de la présente invention comporte, de plus, une étape de mélange du premier flux d'air et du deuxième flux d'air avant d'être introduit dans le volume intérieur de l'abri de culture fermé.

Préférentiellement, les moyens des déshumidificateurs, 300 et 500, sont configurés pour mettre en oeuvre les étapes du procédé 700 et leurs modes de réalisation tels qu'exposés ci-dessus et le procédé 700 ainsi que ses différents modes de réalisation peuvent être mis en oeuvre des déshumidificateurs, 300 et 500.

### Exemple 1 :

Un premier exemple de fonctionnement du déshumidificateur 300 objet de la présente invention est décrit ci-dessous. Dans ce premier exemple, de l'air à 10 °C et 75 % d'humidité est prélevé dans le volume intérieur de la serre 301, par le premier circuit 315 et par le deuxième circuit 330.

En sortie de la portion de dessiccation 312 de la roue dessiccante 310 dans le deuxième circuit 330, l'air du deuxième flux d'air est à 16 °C et 40 % d'humidité.

En sortie du condenseur 317 et en entrée de la partie à régénérer 311 de la roue dessiccante 310 dans le premier circuit 315, l'air du premier flux d'air est à 39 °C et 15 % d'humidité.

En sortie de la partie à régénérer 311 de la roue dessiccante 310 et en entrée de l'échangeur de chaleur 320 (avant la première traversée de celui-ci), l'air du premier flux d'air est à 21 °C et 70 % d'humidité.

En sortie de l'échangeur de chaleur 320 (après la première traversée dudit échangeur 320) et en entrée de l'évaporateur 318, l'air du premier flux d'air est à 12 °C et 100 % d'humidité.

En sortie de l'évaporateur 318 et en entrée de l'échangeur de chaleur 320 (avant la deuxième traversée dudit échangeur 320), l'air du premier flux d'air est à 2 °C et 100 % d'humidité.

En sortie de l'échangeur de chaleur 320 (après la deuxième traversée dudit échangeur de chaleur 320) et avant d'atteindre la sortie 332 du deuxième circuit 330, l'air du premier flux d'air est à 25 °C et 20 % d'humidité.

L'air résultant du mélange du premier flux d'air et du deuxième flux d'air en aval de la sortie 332 du deuxième circuit 330 est à 23 °C et 20 % d'humidité. Il est rejeté dans le volume intérieur de la serre 301.

### Exemple 2 :

Un deuxième exemple de fonctionnement du déshumidificateur 500 dans le premier état, c'est-à-dire un exemple du premier mode de fonctionnement du déshumidificateur 500 est décrit ci-dessous. Dans ce deuxième exemple, de l'air à 5 °C et 75 % d'humidité est prélevé dans le volume intérieur de la serre 501, par le premier circuit 515 et par le deuxième circuit 530.

En sortie de la portion de dessiccation 512 de la roue dessiccante 510 dans le deuxième circuit 530, l'air du deuxième flux d'air est à 10 °C et 35 % d'humidité.

En sortie du condenseur 517 et en entrée de la partie à régénérer 511 de la roue dessiccante 510 dans le premier circuit 515, l'air du premier flux d'air est à 40 °C et 10 % d'humidité.

En sortie de la partie à régénérer 511 de la roue dessiccante 510 et en entrée de l'évaporateur 518, l'air du premier flux d'air est à 17 °C et 70 % d'humidité.

En sortie de l'évaporateur 518 et avant d'atteindre la sortie 532 du deuxième circuit 530, l'air du premier flux d'air est à 3 °C et 100 % d'humidité.

L'air résultant du mélange du premier flux d'air et du deuxième flux d'air en aval de la sortie 532 du deuxième circuit 530 est à 9 °C et 50 % d'humidité. Il est rejeté dans le volume intérieur de la serre 501.

### Exemple 3 :

Un troisième exemple de fonctionnement du déshumidificateur 500 dans le deuxième état, c'est-à-dire un exemple du deuxième mode de fonctionnement du déshumidificateur 500 est décrit ci-dessous. Dans ce troisième exemple, de l'air à 20 °C et 75 % d'humidité est prélevé dans le volume intérieur de la serre 501, par le registre 561 ouvert.

En sortie de l'évaporateur 518 et en entrée du condenseur 555, l'air de l'unique flux d'air est à 11 °C et 100 % d'humidité.

En sortie du condenseur 555, l'air de l'unique flux d'air est à 30 °C et 30 % d'humidité. Cet air est rejeté dans le volume intérieur de la serre 501.

L'invention ne se limite pas aux modes de réalisation décrits plus haut. En particulier, n'importe laquelle des serres 301 et 501 peut être remplacée par une salle de culture en intérieur avec éclairage artificiel sans sortir du cadre de l'invention.

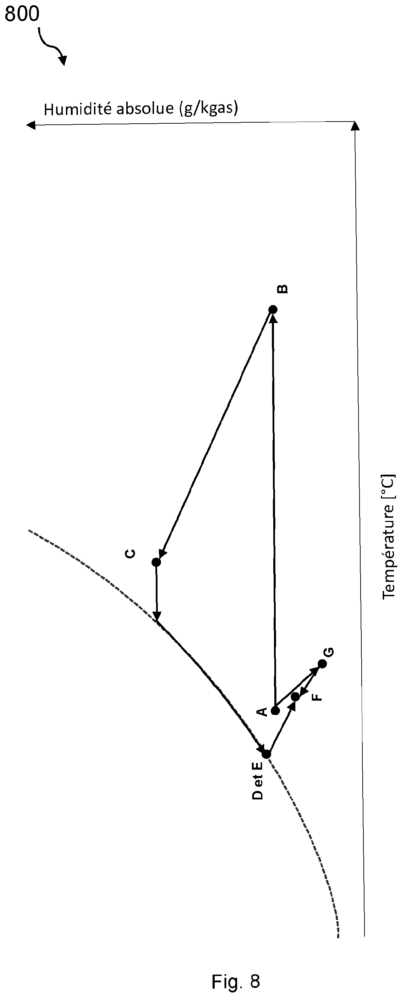

On observe, sur la figure 8, un diagramme de l'air humide dans lequel est représenté, schématiquement, le fonctionnement thermodynamique du premier flux d'air dans le dispositif représenté en figure 5. Les points de A à G sur le graphique correspondent aux valeurs de température et d'humidité aux points A à G en figure 5. On note notamment que le flux d'air entre l'entrée C et la sortie D de l'évaporateur est refroidi et déshumidifié. Notamment, la vapeur d'eau contenue dans l'air en entrée de l'évaporateur 518 est condensée et évacuée sous forme de condensats 540. Le flux d'air en sortie D de l'évaporateur 518 présente donc une humidité absolue inférieure au flux d'air en entrée C de l'évaporateur 518.

## Revendications

1. Déshumidificateur (300, 500) pour abri de culture fermé (301, 501), **caractérisé en ce qu'**il comprend :
- un premier circuit (315, 515) de transport d'un premier flux d'air selon un sens prédéterminé,
- un deuxième circuit (330, 530) de transport d'un deuxième flux d'air,
- un dispositif dessiccant (310, 510) à régénération cyclique dont une portion à régénérer (311, 511) est positionnée dans le premier circuit (315, 515) pour être traversée par le premier flux d'air et dont une portion de dessiccation (312, 512) pour capturer de l'eau dans le deuxième flux d'air est positionnée dans le deuxième circuit (330, 530) pour être traversée par le deuxième flux d'air,
- un groupe de froid comprenant un condenseur (317, 517) de réchauffement du premier flux d'air et un évaporateur (318, 518) configuré pour refroidir et déshumidifier le premier flux d'air, par condensation d'eau présente dans le premier flux d'air, qui sont tels que :
- le condenseur (317, 517) est connecté dans le premier circuit (315, 515), en amont de la portion à régénérer (311, 511) du dispositif dessiccant (310, 510), et
- l'évaporateur (318, 518) est connecté dans le premier circuit (315, 515), en aval de la portion à régénérer (311, 511) du dispositif dessiccant (310, 510).

2. Déshumidificateur (300, 500) selon la revendication 1, qui comporte un échangeur de chaleur (320) connecté dans le premier circuit (315, 515) et configuré pour mettre en relation d'échange thermique le premier flux d'air dans une première section du premier circuit (315, 515) avec ce premier flux d'air dans une deuxième section du premier circuit (315, 515), la première section du premier circuit (315, 515) se trouvant entre la portion à régénérer (311, 511) du dispositif dessiccant (310, 510) et l'évaporateur (318, 518), la deuxième section du premier circuit (315, 515) se trouvant en aval de l'évaporateur (318, 518).

3. Déshumidificateur (500) selon l'une des revendications 1 ou 2,
qui comprend une branche de contournement (560) configurée pour acheminer de l'air dans l'abri de culture fermé, à passer à l'écart du dispositif dessiccant (310, 510) et se raccorder dans le premier circuit (315, 515), entre le dispositif dessiccant (310, 510) et l'évaporateur (318, 518), et
- dans lequel le condenseur (317, 517) est un premier condenseur, le déshumidificateur comprenant un deuxième condenseur (555),
le déshumidificateur comportant un moyen de commutation entre un premier état, dans lequel les premier et deuxième circuits (330, 530) sont opérationnels et dans lequel la branche de contournement (560) est fermée, et un deuxième état, dans lequel le deuxième condenseur (555) est connecté dans le premier circuit (315, 515), en aval de l'évaporateur (318, 518), et dans lequel la branche de contournement (560) est ouverte et substituée dans le premier circuit (315, 515) à une section désactivable comprenant le dispositif dessiccant (310, 510).

4. Déshumidificateur selon la revendication 3, dans lequel, dans le premier état, le premier condenseur (317, 517) est opérationnel au sein du groupe de froid en étant connecté dans un circuit fermé (552) comprenant l'évaporateur (318, 518), et dans lequel, dans le deuxième état, le deuxième condenseur (555) est opérationnel au sein du groupe de froid en étant substitué au premier condenseur (317, 517) dans le circuit fermé (552).

5. Déshumidificateur selon l'une des revendications 3 ou 4, qui comprend un dispositif de contrôle et de commande (570) configuré pour mesurer la température ambiante et pour activer le moyen de commutation, le déshumidificateur commutant du deuxième état au premier état lorsque la température ambiante descend en dessous d'une première valeur limite prédéterminée.

6. Déshumidificateur selon la revendication 5, dans lequel la première valeur limite prédéterminée est comprise entre 8 °C et 12 °C.

7. Déshumidificateur selon l'une des revendications 5 ou 6, dans lequel le dispositif de contrôle et de commande (570) est configuré pour activer le moyen de commutation, le déshumidificateur commutant du premier état au deuxième état lorsque la température ambiante monte au-dessus d'une deuxième valeur limite prédéterminée.

8. Déshumidificateur selon la revendication 7, dans lequel la deuxième valeur limite prédéterminée est comprise entre 8 °C et 12 °C.

9. Déshumidificateur selon l'une des revendications 1 à 8, qui comprend des moyens d'entraînement (545, 546) à même de mettre en mouvement l'air des premier et deuxième flux d'air.

10. Installation comprenant un abri de culture fermé (301, 501) ayant un volume intérieur rempli d'air, **caractérisée en ce qu'**elle comprend un déshumidificateur selon l'une des revendications 1 à 9, et **en ce qu'**une entrée (316) du premier circuit (315, 515), une entrée (331) du deuxième circuit (330, 530), une sortie (322) du premier circuit (315, 515) et une sortie (332, 532) du deuxième circuit (330, 530) sont en communication fluidique avec le volume intérieur de l'abri de culture fermé (301, 501).

11. Installation selon la revendication 10, dans laquelle le premier circuit (315, 515) passe à l'écart de la portion de dessiccation du dispositif dessiccant (310, 510).

12. Procédé (700) de déshumidification d'air présent à l'intérieur d'un abri de culture fermé (301, 501), **caractérisé en ce qu'**il comprend une régénération (705) et un traitement (710),
dans lequel la régénération (705) comprend :
- une étape 715 de chauffage d'un premier flux d'air en provenance d'un volume intérieur de l'abri de culture fermé (301, 501) ; à travers un condenseur (317, 517) d'un groupe de froid,
- une étape de régénération au moins partielle, par le premier flux d'air chauffé, d'une portion à régénérer (311, 511) d'un dispositif dessiccant (310, 510) à régénération cyclique
- après l'étape de régénération, une étape de refroidissement et de déshumidification (725) du premier flux d'air à travers un évaporateur (318, 518) du groupe de froid de manière que de l'eau présente dans le premier flux d'air se condense dans l'évaporateur (318, 518) pour être évacuée sous forme liquide,
- une étape d'acheminement (730) du premier flux d'air de la portion à régénérer (311, 511) du dispositif dessiccant (310, 510) vers le volume intérieur de l'abri de culture fermé (301, 501),
dans lequel le traitement (710) comporte :
- une étape d'extraction (735) de la vapeur d'eau d'un deuxième flux d'air en provenance du volume intérieur de l'abri de culture fermé (301, 501), en faisant passer ledit deuxième flux d'air à travers une portion de dessiccation (312, 512) du dispositif dessiccant (310, 510),
- une étape d'acheminement (740) du deuxième flux d'air de la portion de dessiccation (312, 512) du dispositif dessiccant (310, 510) vers le volume intérieur de l'abri de culture fermé (301, 501).

13. Procédé selon la revendication 12, qui comporte, de plus, une étape de mélange du premier flux d'air et du deuxième flux d'air avant d'être introduit dans le volume intérieur de l'abri de culture fermé.
